# EUROPEAN PATENT APPLICATION

(11) **EP 1 712 989 A1**
(43) Date of publication of application: **18.10.2006**
(21) Application number: 05252385.9
(22) Date of filing: 15.04.2005
(51) Int. Cl.: G06F 9/44, G06F 21/22

(54) **A computer system, integrable software component and software application**

(71) Applicant: Perkinelmer Singapore PTE Ltd., Singapore 139947 (SG)
(72) Inventor: Hooper, David, Bourne End, Buckinghamshire SL8 5QS (GB); Lidiard, David, High Wycombe, Buckinghamshire HP12 4LA (GB); Ault, Arthur, High Wycombe, Buckinhamshire HP14 4RE (GB)
(74) Representative: Smith, Norman Ian

(57) **Abstract**

A computer system is provided comprising a software application. The software application comprises a host application (51) and an integrable software component (52) integrated with the host application (51) for implementing controls in the host application (51). The software component (52) is arranged to control access to functions of the host application (51) on the basis of data supplied by a user and data stored in an external database (3).

## Description

The present invention relates to a computer system, an integrable software component and a software application, particularly a computer system comprising an integrable software component for implementing controls in an application, an integrable software component for implementing controls in an application and a software application comprising an integrable software component.

A control in the context of the present application means a control allowing or preventing access to functionality of an application. For example, a control may prevent access to certain functionality of an application to certain groups of users whilst allowing access to the same functionality to other users.

In the United States of America, the Food and Drug administration (FDA) regulates many products with a view to protecting the public health. In order to comply with Federal regulations in this regard it may become necessary to submit documents to the FDA, which may be done electronically. 21 CFR part 11 is a Federal regulation that applies to records in electronic form that are created, modified, archived, retrieved, or transmitted under records requirements set out in FDA regulations. 21 CFR part 11 imposes certain requirements on computer systems used to handle these files including rules relating to the restriction of access to any computer system used to handle the files, the provision of audit trails, use of authority checks and rules relating to electronic signatures.

A common way of setting up software to meet the FDA regulations is to individually customise the applications that need to be 21 CFR part 11 compliant. This customisation process may include setting permissions within the application, identifying users and groups of users and setting up electronic signatures. This process must be repeated for each application.

It is an object of the present invention to allow easier implementation of controls in software applications, for example, to make it easier to comply with at least some of the requirements of 21 CFR part 11 regulations.

According to a first aspect of the present invention there is provided a computer system comprising a software application, the software application comprising a host application and an integrable software component integrated with the host application for implementing controls in the host application, the software component being arranged to control access to functions of the host application on the basis of data supplied by a user and data stored in an external database.

The integrable software component may be integrable into a plurality of different software applications. The use of the same integrable software component to control the different applications makes development of new software applications easier by reducing the need to introduce functions provided by the integrable software component, for example login or audit trail functionality.

The integrable software component may be a binary software component. By using a binary software component, the integrable software component may be used with host applications written in many different languages. The integrable software component may be a COM component.

The integrable software component may provide an interface via which it interacts with the host application. The host application may be arranged to interact with the integrable software component via an interface of the integrable software component.

The software application may be arranged such that the integrable software component and the host application are simultaneously installed on a computer. The integrable software component may be included in an installer for the software application. The installer may allow selection of features of the integrable software component to be installed with the host application at the time of installation.

The integrable software component may be arranged to provide an authentication service, which authentication service causes user data input by a user to be compared with user data stored in the external database. The integrable software component may be arranged to control access to functions of the software application based on authentication data supplied by another software application. The other software application may be an authentication service provided by an operating system on which the application is running. The integrable software component may be arranged to control access to the software application based on biometric identification by appropriate hardware attached to the computer system.

The integrable software component may be arranged to allow management of user data. For example, the integrable software component may allow management of usernames and/or groups of usernames. User related data may be stored on the external database.

The integrable software component may allow permissions to be set, which permissions determine a user's ability to access to functions of the software application. The integrable software component may allow permissions to be set on the basis of groups to which one or more users may be allocated. Data relating to permissions may be stored on the external database.

The integrable software component may be able to generate a list of all users and/or associated data, stored in the external database.

The integrable software component may be arranged to generate a record of changes made to data on the computer system. The record of changes made to data on the computer system may be stored in the external database.

The integrable software component may be arranged to generate a login history file, which login history file includes data relating to successful and unsuccessful attempts to login to the software application. The login history file may be stored on the external database.

The integrable software component may be arranged to provide electronic signature functionality. The integrable software component may be arranged to cause the software application to require a user to use an electronic signature when performing certain actions with the software application. The integrable software component may be arranged to display text describing the reason that an electronic signature is required.

The integrable software component is arranged to access data stored in the external database. This external database may be provided over a network but could alternatively be provided on the user's computer. The use of an external database allows different applications to access data stored in the database (for example user names, passwords, groups etc.). Further, the ability to import this data directly into an application can usefully reduce setup time for an application being installed on a computer system implementing the present invention. The external database may be encrypted and/or checksummed in order to improve security.

The integrable software component and external database may be arranged so that different software applications installed on the same computer system use common data in the external database. The common data may relate to, for example, usernames, passwords, groups etc.

The integrable software component and external database may be arranged so that a plurality of installations of an application provided on the same computer system may access the same external database. The common data may include usernames, passwords, groups etc, and may further include data relating to permissions within the application.

The integrable software component and/or external database may be arranged for implementation of requirements of 21 CFR part 11.

According to a second aspect of the present invention there is provided an integrable software component for controlling functionality in a host application, which integrable software component is arranged to control functionality in a host application based on data stored in an external database.

According to a third aspect of the present invention there is provided a software application comprising a host application and an integrable software component integrated with the host application for implementing controls in the host application, the software component being arranged to control access to functions of the host application on the basis of the data stored in an external database.

Optional features described with reference to the first aspect of the present invention may be features of the second and/or third aspects of the present invention.

An embodiment of the present invention will now be described, by way of example only, with reference to the accompanying drawings in which:
Figure 1 shows the layout of a computer system embodying the present invention;
Figure 2 shows the structure of an application being run on a computer in the computer system shown in Figure 1.

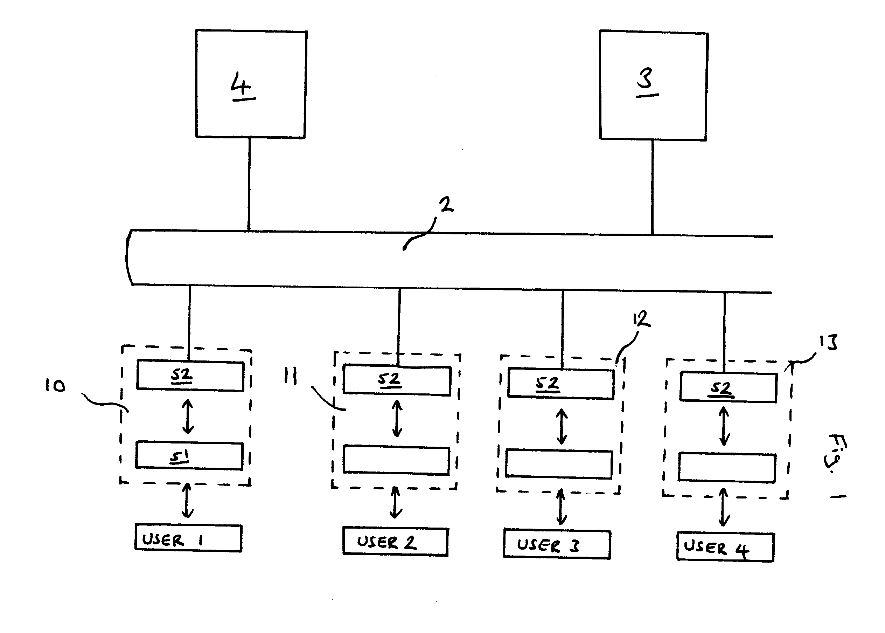

Figure 1 shows a computer system comprising four computers (10, 11, 12, 13) connected via a local area network (2) to a global security component database (3) and a windows (RTM) username/password authentication server (4). A first computer (10) is running a first application, application 1, and is being operated by a first user, user 1; a second computer (11) is also running application 1 and is being operated by a second user, user 2. A third computer (12) is running a second application, application 2, and is being operated by a third user, user 3, and a fourth computer (13) is running a third application, application 3, and is being operated by a fourth user, user 4.

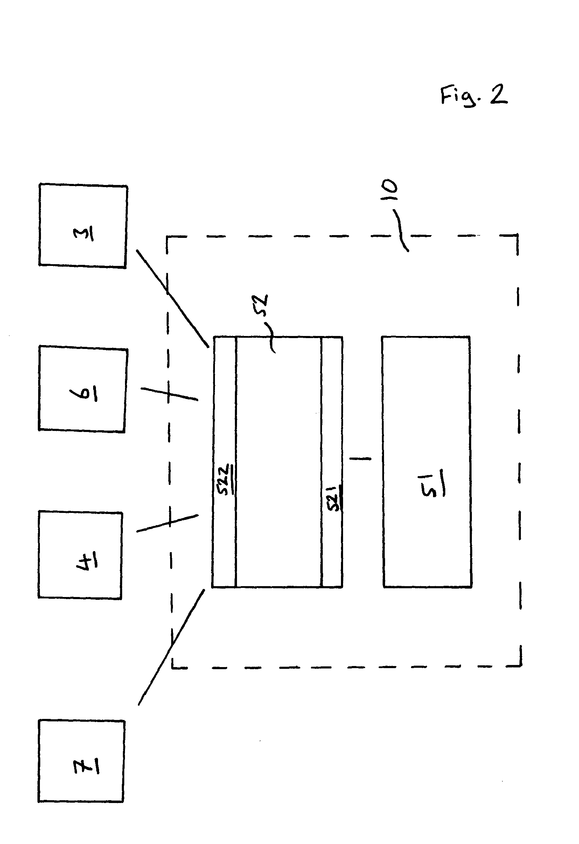

Figure 2 shows the first computer (10) running application 1. Application 1 is formed of a host application (51) and a global security component (52). The host application (51) interacts with the global security component (52) via an application interface (521). The global security component (52) also has an authentication interface (522) via which it may interact with the global security database (3), the windows (RTM) username/password authentication server (4), a biometric authentication device (6) and an alternative authentication means (7).

In this embodiment of the present invention the global security component is provided as a COM component programmed in C++. COM (component object model) is a software architecture designed by Microsoft (RTM) that allows binary software components to inter-operate. COM components are provided in binary form with interfaces via which they may interact with other components or applications. COM provides standards concerning the set-up of component interfaces so that other components or applications may interact with a component regardless of the internal structure of the component. This allows interaction between a component and an application or other component even where the components and/or application are not written in the same programming language.

The global security component (52) is provided in application 1 with a view to complying with the requirements of 21 CFR part 11. The requirements of 21 CFR part 11 were described briefly in the introduction to this patent specification. In particular, the global security component (52) is provided in application 1 to control access by users to the functionality of host application (51).

The host application (51) is designed to be used with and take advantage of the global security component (52). In particular, the host application (51) is arranged to interact with the global security component (52) via its interfaces. In the illustrated embodiment the host application (51) and global security component (52) were installed on computer (10) during a single installation. The global security component (52) was included in the installer of host application (51) in the form of a merge module allowing simultaneous installation of the host application (51) and global security component (52).

One of the functions of the global security component (52) is to provide an authentication service. The authentication service allows a user to enter information, for example a username and password, in order to gain access to functionality of the host application (51). One way that a user may authenticate with the global security component (52) is via the computer (10). Data, for example a user name and password, may be input by the user when prompted. The global security component (52) then compares the input data with user data, which is stored on the global security component database (3). Alternatively the external database may be the windows (RTM) username/password authentication server (4). An advantage of using the windows (RTM) username/password authentication server is that a user does not need to remember a different username and password for logging on to the computer and for using the software applications (application 1, application 2 and application 3).

Authentication may also be provided on the basis of data supplied from biometric authentication device (6). It is envisaged that other sources of data for authentication could be provided and these are shown schematically in Figure 2 by alternative authentication means (7).

As the global security component database (3) is used to store the data used for authenticating user details it is important that this database is not tampered with. The database (3) shown in Figure 2 is both encrypted and checksummed in order to enhance security.

The global security component (52) provides the following additional functionality. The global security component (52) may be used to manage usernames and passwords stored on the global security component database. The global security component (52) allows addition of usernames/ passwords, modification of usernames/ passwords, deletion of usernames and passwords and an enable/disable function which allows usernames and passwords to be marked so that they are accepted or rejected when being authenticated by the global security component (52).

The global security component may also enforce password policies, for example rejecting passwords that are below a predetermined length, requiring passwords to be changed periodically etc.

As mentioned above, the global security component (52) controls access by users to functionality of the host application (51). The global security component (52) provides permission to access the functionality of the host application (51) on the basis of groups. A certain group of usernames may for example be given access to the complete functionality of application 1. The global security component (52) also allows management of groups enabling users to be added or removed from a group and allowing permissions to be assigned to groups and/or individual users.

The global security component (52) is able to produce a summary identifying all user information stored in the global security component database (3). Further the global security component (52) writes a log-in history which records successful and unsuccessful attempts to log-in via the global security component (52). The log-in history is stored on the global security component database (3).

The global security component (52) also allows electronic signature functionality to be provided in the host application (51). An electronic signature may, for example, be added to a record or communication that a user is working with. The global security component (52) may also be used to provide signature points. At a signature point a user is required to provide an electronic signature when performing a particular action with the software application, for example approving or rejecting a report. Further the software application may display text explaining why an electronic signature is required at the signature point.

Figure 1 shows various computers running various software applications. The first computer (10) and second computer (11) are running the same application, application 1. As noted above, username, password and permission data is stored on the global security component database (3). Application 1 accesses the same data when running on both the first computer (10) and the second computer (11).

Therefore if user 1 logs-off from the first computer (10) and walks over to the second computer (11), user 1 may log-in to the second computer (11) and have the same access to application 1 (using the same username and password and therefore having the same permissions) as when working on the first computer (10).

The third computer (12) is running application 2. Application 2 is again formed of a host application and the global security component (52). The host application however is a different from the host application in application 1. Because application 2 uses the same global security component (52) as application 1, the authentication process is the same. Further because the global security component (52) accesses the global security component database (3) over local area network (2), application 2 makes use of the same username and password data as application 1. However, because the host application in application 2 is different from the host application in application 1, the potential functionality of application 2 is different. In view of this, the permissions associated with a user of the first application are not used for application 2. However, if application 1 is subsequently installed on the third computer (12), the username, password and permissions data from the global security component database are available to that new installation of application 1.

The design of the global security component allows the global security components (52) to be integrated with any host application which is appropriately designed to make use of the global security components interfaces (521; 522). When such software applications are provided on a network with a common global security database (3) the applications use common data stored in the global security component database (3) removing the need to set-up username and password information individually in each application.

## Claims

1. A computer system comprising a software application, the software application comprising a host application and an integrable software component integrated with the host application for implementing controls in the host application, the software component being arranged to control access to functions of the host application on the basis of data supplied by a user and data stored in an external database.

2. A computer system according to claim 1 wherein the integrable software component is integrable in a plurality of different software applications.

3. A computer system according to any preceding claim wherein the integrable software component is a binary software component.

4. A computer system according to claim 3 wherein the integrable software component is a COM component.

5. A computer system according to any preceding claim wherein the integrable software component provides an interface via which it interacts with the host application.

6. A computer system according to any preceding claim wherein the host application is arranged to interact with the integrable software component via an interface of the integrable software component.

7. A computer system according to any preceding claim wherein the integrable software component is arranged to provide an authentication service, which authentication service causes user data input by a user to be compared with user data stored in the external database.

8. A computer system according to claim 7 wherein the integrable software component is arranged to control access to functions of the software application based on authentication data supplied by another software application.

9. A computer system according to any preceding claim wherein the integrable software component is arranged to allow management of user data.

10. A computer system according to any preceding claim wherein the integrable software component is arranged to allow permissions to be set, which permissions determine a user's ability to access to functions of the software application.

11. A computer system according to claim 10 wherein the integrable software component is arranged to allow permissions to be set on the basis of groups to which one or more users may be allocated.

12. A computer system according to any preceding claim wherein the integrable software component is arranged to provide electronic signature functionality.

13. A computer system according to claim 12 wherein the integrable software component is arranged to cause the software application to require a user to use an electronic signature when performing certain actions with the software application.

14. A computer system according to claim 13 wherein the integrable software component is arranged to display text describing the reason that an electronic signature is required.

15. A computer system according to any preceding claim wherein the external database is provided over a network

16. A computer system according to any preceding claim wherein the external database is encrypted.

17. A computer system according to any preceding claim wherein the external database is checksummed

18. A computer system according to any preceding claim wherein the integrable software component and external database are arranged so that different software applications installed on the same computer system use common data in the external database.

19. A computer system according to any preceding claim wherein the integrable software component and external database are arranged so that a plurality of installations of an application provided on the same computer system may access the same external database.

20. A computer system according to any preceding claim wherein the integrable software component and/or external database are arranged for implementation of requirements of 21 CFR part 11.

21. An integrable software component for controlling functionality in a host application, which integrable software component is arranged to control functionality in a host application base on data stored in an external database.

22. An integrable software component according to claim 21 wherein the integrable software component is integrable in a plurality of different software applications.

23. An integrable software component according to claim 21 or claim 22 wherein the integrable software component is a binary software component.

24. An integrable software component according to claim 23 wherein the integrable software component is a COM component.

25. An integrable software component according to any one of claims 21 to 24 wherein the integrable software component provides an interface via which it may interact with a host application.

26. An integrable software component according to any one of claims 21 to 25 wherein the integrable software component is arranged to provide an authentication service, which authentication service causes user data input by a user to be compared with user data stored in an external database.

27. An integrable software component according to claim 26 arranged to control access to functions of a software application based on authentication data supplied by another software application.

28. An integrable software component according to any one of claims 21 to 27 arranged to allow management of user data.

29. An integrable software component according to any one of claims 21 to 28 wherein the integrable software component is arranged to allow permissions to be set, which permissions determine a user's ability to access to functions of a sofware application.

30. An integrable software component according to claim 29 wherein the integrable software component is arranged to allow permissions to be set on the basis of groups to which one or more users may be allocated.

31. An integrable software component according to any one of claims 21 to 30 wherein the integrable software component is arranged to provide electronic signature functionality.

32. An integrable software component according to claim 31 wherein the integrable software component is arranged to cause a software application to require a user to use an electronic signature when performing certain actions with the software application.

33. An integrable software component according to claim 32 arranged to display text describing the reason that an electronic signature is required.

34. An integrable software component according to any one of claims 21 to 33 arranged for implementation of requirements of 21 CFR part 11.

35. A software application comprising a host application and an integrable software component integrated with the host application for implementing controls in the host application, the software component being arranged to control access to functions of the host application on the basis of the data stored in an external database.

36. A software application according to claim 35 wherein the integrable software component is integrable in a plurality of different software applications.

37. A software application according to claim 35 or claim 36 wherein the integrable software component is a binary software component.

38. A software application according to claim 37 wherein the integrable software component is a COM component.

39. A software application according to any one of claims 35 to 38 wherein the integrable software component provides an interface via which it interacts with the host application.

40. A software application according to any one of claims 35 to 39 wherein the host application is arranged to interact with the integrable software component via an interface of the integrable software component.

41. A software application according to any one of claims 35 to 40 wherein the integrable software component is arranged to provide an authentication service, which authentication service causes user data input by a user to be compared with user data stored in an external database.

42. A software application according to claim 41 wherein the integrable software component is arranged to control access to functions of the software application based on authentication data supplied by another software application.

43. A software application according to any one of claims 35 to 42wherein the integrable software component is arranged to allow management of user data.

44. A software application according to any one of claims 35 to 43wherein the integrable software component is arranged to allow permissions to be set, which permissions determine a user's ability to access functions of the software application.

45. A software application according to claim 44 wherein the integrable software component is arranged to allow permissions to be set on the basis of groups to which one or more users may be allocated.

46. A software application according to any one of claims 35 to 45 wherein the integrable software component is arranged to provide electronic signature functionality.

47. A software application according to claim 46 wherein the integrable software component is arranged to cause the software application to require a user to use an electronic signature when performing certain actions with the software application.

48. A software application according to claim 47 wherein the integrable software component is arranged to display text describing the reason that an electronic signature is required.

49. A software application according to any one of claims 35 to 48 wherein the integrable software component is arranged for implementation of requirements of 21 CFR part 11.
